# NEW EUROPEAN PATENT SPECIFICATION

(11) **EP 1 238 901 B2**
(45) Date of publication and mention of the opposition decision: **30.07.2008**
(45) Mention of the grant of the patent: 11.02.2004
(21) Application number: 01105274.3
(22) Date of filing: 05.03.2001
(51) Int. Cl.: B62M 11/16

(54) **Bicycle hub transmission with coaster brake**
Antriebsnabe mit Bremse für ein Fahrrad
Moyeu d'entraînement avec un frein pour bicyclette

(43) Date of publication of application: 11.09.2002
(73) Proprietor: SHIMANO INC., Osaka 590-8577 (JP)
(72) Inventor: Urabe, Hiroyuki, Shimonoseki-city, Yamaguchi 750-1101 (JP)
(74) Representative: Wallinger, Michael

(56) References cited:
- EP-A- 0 795 461
- EP-A- 0 795 462
- EP-B- 0 795 461
- EP-B- 0 795 462
- DE-A- 1 425 839
- DE-A- 2 337 725
- DE-A- 2 533 308
- DE-A- 2 819 471
- DE-A- 3 732 977
- DE-B- 1 946 871
- DE-C- 2 209 535
- DE-C- 2 337 725
- DE-C- 3 407 164
- DE-C- 3 440 068
- US-A- 3 937 309
- US-A- 4 063 469
- US-A- 4 240 533

## Description

The present invention relates to bicycle transmissions and, more particularly, to an internal bicycle transmission which includes a coaster brake unit.

An internally mounted bicycle transmission which includes a coaster brake unit is disclosed in U.S. Pat. No. 3,937,309. This internal hub includes a hub axle, a drive member rotatably mounted around the hub axle, a hub body rotatably mounted around the hub axle, and a planetary gear mechanism coupled between the drive member and the hub body for communicating rotational force from the drive member to the hub body through multiple rotational force transmission paths. The planetary gear mechanism includes a planet gear supported by a planet gear rack for rotation around the hub axle, and a ring gear engaging the planet gear. The transmission provides three speeds depending upon the axial position of a clutch unit that is coupled to a driving member.

Such transmissions ordinarily include a coaster brake unit, wherein the reverse rotational power from the driver causes a brake cone provided to the gear rack to move in the axial direction. This movement of the brake cone in the axial direction causes a brake shoe to expand, thus producing a braking action. Unfortunately, the reverse rotational power from the driver must proceed through the same transmission path used for forward rotation of the driver. Thus, for a given force applied to the pedals in the braking direction, a different braking force will be applied to the wheel depending on the transmission path selected at the time of braking. As a result, the braking force applied to the wheel may be different from what the rider intended and may be insufficient or too much.

The United States Patent No. US 4,240,533 discloses a transmission with a coaster brake having a change-over mechanism, which causes a reverse rotational force induced by back-pedaling of the bicycle to be transmitted to a ring gear, regardless of which driving speed is selected at the time of braking.

The European patent EP 0 795 461 which constitutes the closest prior art, discloses a hub transmission with a coaster brake. The hub includes a planetary gear mechanism, where a planet gear and a ring gear are alternatively engaged depending of the position of a movable clutch. The movable clutch is provided with engagement means which alternatively engage the planet gear rack or the ring gear to allow shifting between three speeds. A forcible movement means is provided for moving the clutch from engagement with the planet gear rack into engagement with the ring gear when a reverse rotational force is applied to the drive member, i.e. when a braking force is applied.

### SUMMARY OF THE INVENTION

The present invention provides a hub transmission with a coaster brake unit as defined in claims 1 and 18. With the coaster brake unit, the braking force applied to the wheels is the same regardless of the selected transmission path. The hub transmission includes a hub axle, a drive member rotatably mounted around the hub axle, a hub body rotatably mounted around the hub axle, and a planetary gear mechanism coupled between the drive member and the hub body for communicating rotational force from the drive member to the hub body through multiple rotational force transmission paths.

The planetary gear mechanism includes a planet gear supported by a planet gear rack for rotation around the hub axle, and a ring gear engaging the planet gear. The gear rack includes at least one depression formed in a peripheral direction thereof, and the ring gear includes at least one serration formed in a peripheral direction thereof. A clutch having engagement means is movable in axial direction of the axle between a first position and a second position. The engagement means engage with the at least one depression in the gear rack for transmitting forward rotational power to the gear rack when the clutch is located in the first position, and engage with the at least one serration in the ring gear for transmitting forward rotational power to the ring gear when the clutch is located in the second position. A forcible movement means forces the clutch to engage with the at least one serration when reverse rotational power is applied to the drive member.

The depression is preferably defined by a side surface and a bottom surface formed on an annular portion of the gear rack. The forcible movement means include a guide surface for contacting the engagement means and moving the clutch to engage with the at least one serration when reverse rotational power is applied to the drive member. As a result, reverse rotational power always is directly applied to the ring gear to produce the same braking force to the coaster brake regardless of the transmission path selected. With a particular configuration of the depressions and serrations, the phase matching of the depressions and serrations is improved. As a result a braking angle corresponding to the amount of reverse rotation of the clutch during the braking operation is advantageously reduced.

Further objects and advantages of the present invention will become apparent in the following description of preferred embodiments in conjunction with the attached drawings, in which:
Fig. 1 is a partial cross sectional view of an embodiment of an internally mounted bicycle transmission which includes a coaster brake unit;
Fig. 2 is a schematic view of the transmission shown in Fig. 1 in a high speed state;
Fig. 3 is a schematic view of the transmission shown in Fig. 1 in a medium speed state;
Fig. 4 is a schematic view of the transmission shown in Fig. 1 in a low speed state;
Fig. 5 is a diagram of a conventional arrangement showing the position of engagement means of a clutch in relation to a depression formed in the gear rack and a serration formed in a ring gear when the transmission is in a high speed state;
Fig. 6 is a diagram of the conventional arrangement of Fig. 5 showing the position of engagement means of a clutch in relation to a depression formed in the gear rack and a serration formed in a ring gear when the transmission is in a medium speed state;
Fig. 7 is a diagram of the conventional arrangement of Fig. 5 showing the position of engagement means of a clutch in relation to a depression formed in the gear rack and a serration formed in a ring gear when the transmission is in a low speed state;
Fig. 8 is a cross sectional side view of a gear rack used in the transmission shown in Fig. 1;
Fig. 9 is a plan view of the gear rack shown in Fig. 8;
Fig. 10 is a cross sectional side view of a ring gear used in the transmission shown in Fig. 1;
Fig. 11 is a plan view of the ring gear shown in Fig. 10;
Fig. 12 is a cross sectional side view of a clutch body used in the transmission shown in Fig. 1;
Fig. 13 is a plan view of the clutch body shown in Fig. 12;
Figs. 14 to 17 show a sequence of movements of an engagement component from a depression to a serration during a braking operation when the starting phase relationship is unfavorable.
Fig. 18 shows the movement of an engagement component from a depression to a serration during a braking operation when the starting phase relationship is favorable;
Fig. 19 shows measurement results of the braking angle with a configuration of the depressions and serrations according to the prior art compared with a configuration according to the present invention;
Fig. 20 shows a further preferred shape of the guide surface for moving the engagement means into engagement with a serration.

### DETAILED DESCRIPTION OF THE EMBODIMENTS

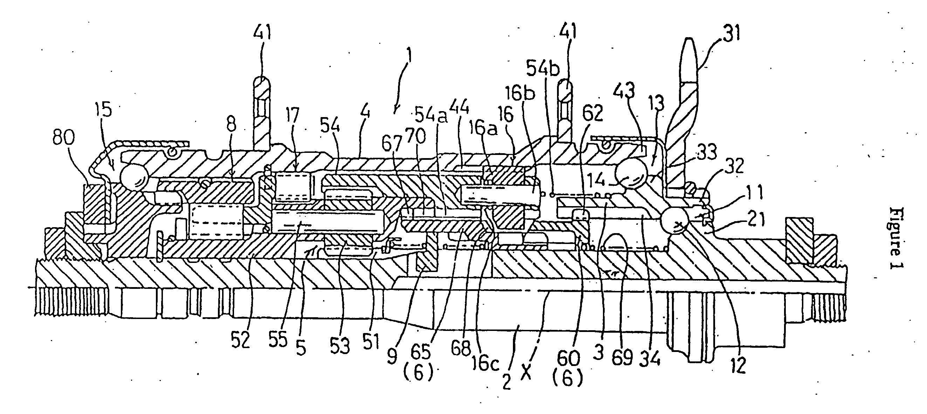

Fig. 1 is a partial cross sectional view of an embodiment of an internally mounted bicycle hub transmission with a coaster brake unit according to the present invention. The transmission 1 comprises a hub axle 2 that is fixed to the bicycle frame and has an axis X; a driver 3 and a hub body 4 that are supported by the hub axle 2 such that they can rotate about the axis X; a planet gear mechanism 5 that transmits power between the driver 3 and the hub body 4; a clutch body 6 that selectively switches the power transmission path between the driver 3 and the hub body 4 through the planet gear mechanism 5; and a roller brake 8, which is itself known as a coaster brake unit.

The driver 3, which functions as the input component for this internal hub transmission 1, has provided around its outer peripheral surface a sprocket 31 that receives the power transmitted by a chain. Further, the internal hub transmission 1 is equipped with a first ball bearing mechanism 11 comprising an outer race 32 formed around the inner peripheral surface of the driver 3 between the driver 3 and the hub axle 2, an inner race 21 formed in the hub axle 2, and balls 12 positioned between these two races.

The hub body 4, which functions as the output component for this internal hub transmission, has formed around its outer peripheral surface a pair of hub flanges 41 that are used to link the spokes (not shown) of a bicycle wheel. Further, the internal hub transmission 1 is equipped with a second ball bearing mechanism 13 comprising an outer race 43 formed around the inner peripheral surface of the hub body 4 between the hub body 4 and the driver 3, an inner race 33 formed around the outer peripheral surface of the driver 3, and balls 14 positioned between these two races. A similar third ball bearing mechanism 15 is provided between the hub body 4 and a brake arm 80 that is fixed to the hub axle 2.

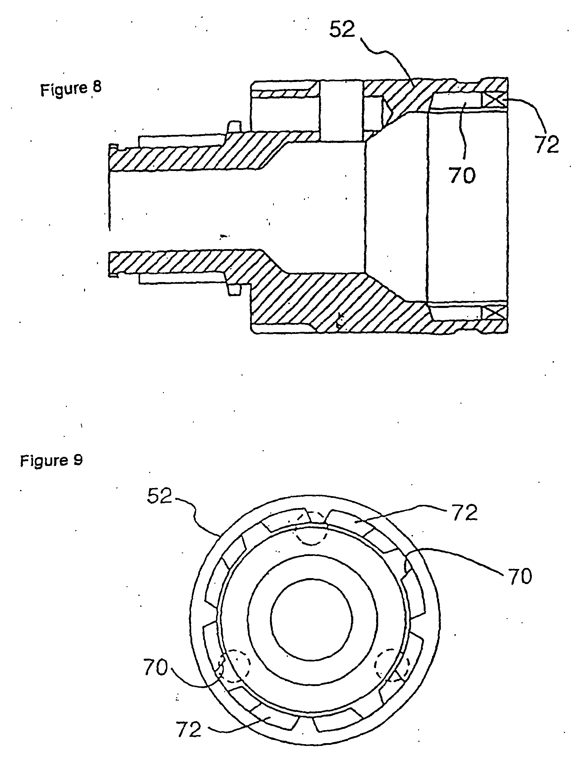

The planet gear mechanism 5 is made up of a sun gear 51 formed around the outer peripheral surface of the hub axle, three planet gears 53 arranged in the peripheral direction so as to mesh with this sun gear 51,. a cylindrical gear rack 52 that makes use of a gear shaft 55 to rotatably support these planet gears 53, and a ring gear 54 that meshes with these planet gears 53. The details of the gear rack 52 are shown in FigS. 8 and 9.

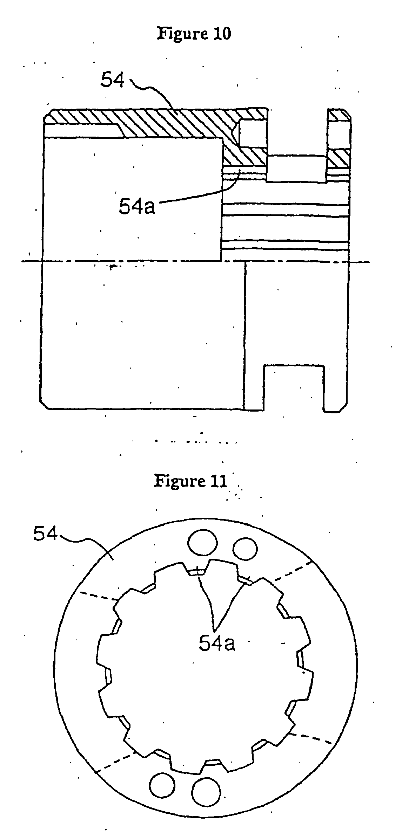

The ring gear 54 is constructed such that it can move along the axis X, and it is urged by a coil spring 54b toward the gear rack 52. Details of one configuration of the ring gear 54 are shown in Figs. 10 and 11. One end of the ring gear 54 is provided with a pawl clutch 16 that functions as a one-way clutch that transmits rotation in the drive direction of the bicycle. This pawl clutch 16 is itself known, and it is made up of an oscillating pawl 16a that meshes with a ratchet 44 formed around the inner peripheral surface of the hub body 4, a support pin 16b that oscillatably attaches this oscillating pawl 16a to the ring gear 54, and a pawl spring 16c that urges this oscillating pawl 16a in the engagement direction.

A roller clutch 17 that functions as a one-way clutch that transmits rotation in the drive direction of the bicycle is provided between the gear rack 52 and the hub body 4. In other words, the transmission of power from the planet gear mechanism 5 to the hub body 4 goes through two paths, namely, a transmission path from the ring gear 54 to the hub body 4 via the pawl clutch 16, and a transmission path from the gear rack 52 to the hub body 4 via the roller clutch 17.

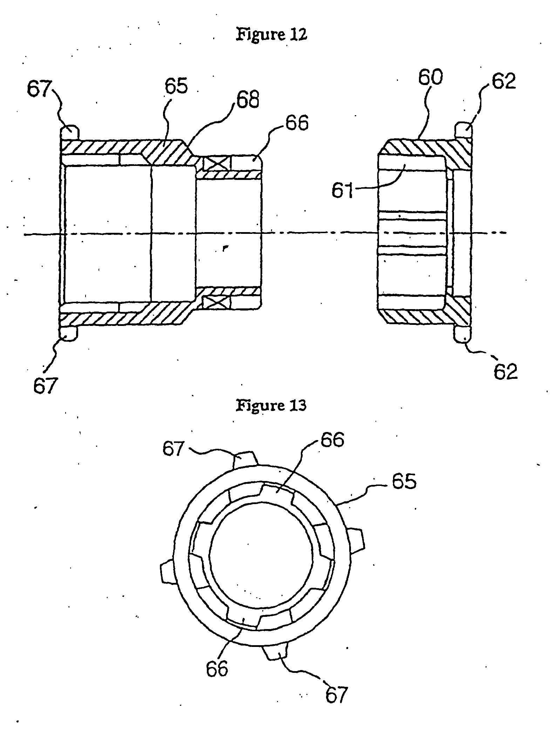

The switching between the above-mentioned two transmission paths is performed by the clutch body 6. Clutch body 6 may be set to a first position, an intermediate position, and a second position in the direction of the axis X using a clutch operator 9 that is connected to a shifter unit by means of a shift cable (not shown). To this end, the clutch body 6 is able to move along the axis X and is able to rotate on the hub axle 2. The clutch body 6 in this embodiment comprises a first clutch member 60 and a second clutch member 65 as shown in FigS. 12 and 13.

In order for the two members to be linked such that torque transmission is possible, an inner spline component 61 is provided to one end of the first clutch member 60, an outer spline component 66 is provided to one end of the second clutch member 66, and the engagement of these spline components 61 and 66 integrates the two members 60 and 65 such that torque transmission is possible. The other end of the first clutch member 60 is provided with an outer spline component 62 that engages with an inner spline component 34 formed around the inner peripheral surface of the driver 3. As a result, the first clutch member 60 rotates integrally with driver 3 and is able to slide in the direction of the axis X with respect to the driver 3.

A step 68 that interacts with the oscillating pawl 16a is provided around the outer peripheral surface of the second clutch member 65. This step 68 acts on the oscillating pawl 16a and knocks it down when the clutch body 6 moves to the right from the first position and reaches the intermediate position, which disengages the oscillating pawl 16a and the ratchet 44. The shape of this step 68 is designed such that the step, 68 will act on the oscillating pawl 16a within the range of movement of the clutch body 6 from the intermediate position to the second position, and will keep the oscillating pawl 16a lying down.

The clutch 6 alternatively engages with the gear rack 52 through depressions 70 or with the ring gear 54 through serrations 54a. For this purpose, the clutch 6 is provided with engagement means. In the embodiment of the clutch shown in Figs. 12 and 13, the engagement means for engaging the depression 70 of the gear rack 52 comprises four engagement components 67. These same engagement components 67 also engage with the serrations 54a (see Figs. 10 and 11) of the ring gear 54, when the clutch is moved to the right in Fig. 1. The number and shape of the components 67 is not limited to that illustrated in the present embodiment.

It will also be understood according to the present invention that the engagement means may comprise one or more first engagement elements (components) disposed on the clutch 6 for engagement with the gear rack 52, while another set of second engagement elements (components) can be provided separately for engagement with the gear ring 54. In this case, the first engagement elements are disposed on the clutch having an axial spacing from the second engagement elements. It will also be understood that the number and shape of the first and second engagement elements can vary depending on the individual application.

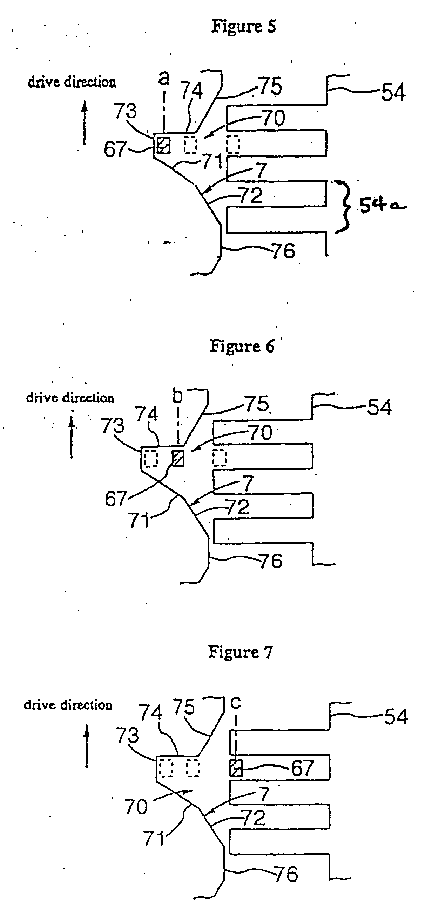

The interaction between the depressions 70 of the gear rack 52, the serrations 54 of the ring gear 54 and the engagement components 67 of the clutch 6 will now be described in conjunction with the Figs. 5, 6 and 7, which represent the conventional arrangement of EP 0 796 461. The dimensions of the depressions with respect to the dimensions of the serrations of these figures does not correspond to those of the presently claimed invention. However, the operation of the clutch can be described with this arrangement of Figs. 5, 6 and 7 for the purposes of illustration. The engagement components 67 can engage with the depressions 70 provided in the form of axial grooves and arranged about the periphery of the gear rack (see Figs. 5, 8 and 9). Alternatively, the engagement components 67 can engage with serrations 54a in the form of axial grooves arranged in an inner peripheral surface of the ring gear 54 (see Figs. 7, 10 and 11).

Figs. 5, 6 and 7 show schematic diagrams of a depression 70 and the serrations 54a, which are folded out in the plane of the paper as two-dimensional illustrations, although they are actually curved in peripheral direction. The arrows on the figures indicate the drive direction of the bicycle, i. e. the drive direction of the indicated members when a forward force is applied by a drive member 3. Rotation in the drive direction is also referred to as forward rotation and rotation in the opposite direction is referred to as reverse rotation.

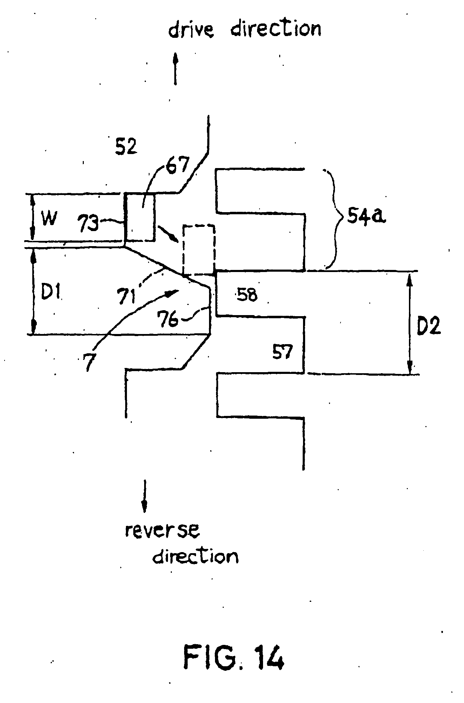

In the arrangement of Figs. 5, 6 and 7, the depression 70 is formed in part by a first inclined surface 71 and a second inclined surface 72, these side surfaces making up the reverse rotational side. It will be understood, however, that this inclined side of the depression 70 can also be formed of a single inclined surface 71, as illustrated in Fig. 14 to be described below. The depression 70 is also defined by the side surface 74 on the forward rotation side, the bottom surface 73, the attachment component 75 and the end surface 76.

When the clutch body 6 is positioned at the first position, the engagement component 67 comes into contact with the gear rack 52 at the position a indicated by the solid line in Fig. 5, and the forward rotational power of the driver 3 is transmitted to the gear rack 52. When the clutch body 6 is positioned at the intermediate position, the engagement component 67 comes into contact with the gear rack 52 at the position b indicated by the solid line in Fig. 6, and the forward rotational power of the driver 3 is transmitted to the gear rack 52. When the clutch body 6 is positioned at the second position, the engagement component 67 comes into contact with the ring gear 54 at the position c indicated by the solid line in Fig. 7, and the forward rotational power of the driver 3 is transmitted to the ring gear 54.

Starting with the engagement component 67 in contact with the gear rack 52, when the pedal is turned backward for braking, the engagement component 67 is rotated in the direction opposite that of the drive. The engagement component 67 comes into contact with the first inclined surface 71, the inclination of which causes the engagement component 67 to slide in the axial direction toward the ring gear 54. Then it slides to the second inclined surface 72 and comes into contact with the ring gear 54, or in some cases it slides until it reaches and rides on the end surface 76 and then come into contact with the ring gear 54.

At some point, the engagement component 67 comes into phase relationship with a serration 54a and finally enters the serration 54a to transmit the reverse rotational force of the driver 3 to the ring gear 54. In certain circumstances, the angular position of the gear rack 54 with respect to the ring gear 54 may be such that a matching of the phases of the depressions with the serrations does not occur immediately. In such cases, the so-called braking angle is increased, i.e. the amount of reverse rotation of the clutch 6 with its engagement component 67 is increased until the matching phase relationship is established.

The present invention provides a configuration of the depressions 70 and the serrations 54a such that this phase relationship is established earlier, with the consequence that the braking angle is reduced.

It has been found that the phase relationship can be improved by providing certain'dimensions of the depressions 70 in relationship to the dimensions of the serrations 54a. This aspect of the invention will now be described with reference to Figs. 14 to 20. As shown in Fig. 14, a peripheral distance D1 of a guide surface 7 including an inclined surface 71 and the end surface 76 is set to be less than or equal to the peripheral pitch D2 of the serrations 54a. In embodiment of Fig. 14, the serrations 54a are indicated as having square wells 57 and square peaks 58. It will be understood that the serrations can be formed with rounded wells and rounded peaks or similar form-locking shapes as desired.

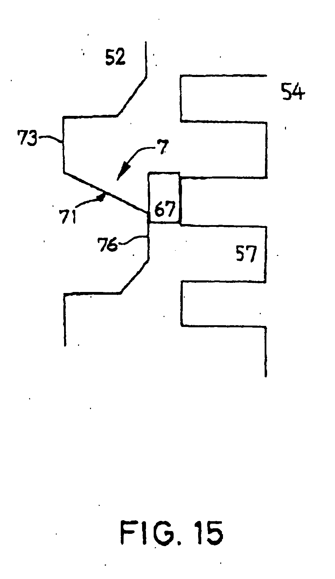

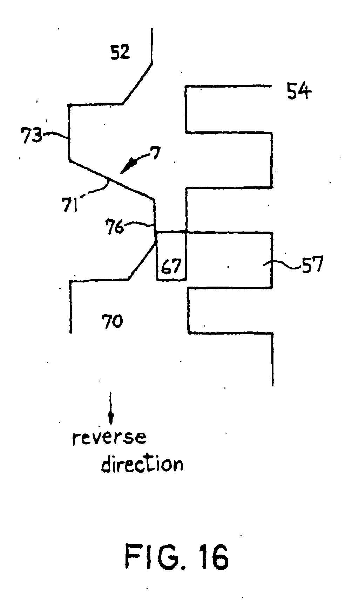

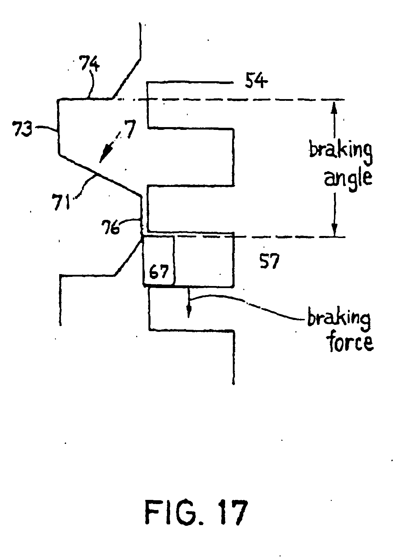

Forcible movement means are provided for moving the clutch ' from the depression 70 into engagement with the serration 54a when reverse rotational power is applied to the drive member. As indicated in Fig. 14, the forcible movement means include the guide surface, generally indicated with the reference numeral 7. In the embodiment of Fig. 14, the guide surface 7 comprises an inclined surface 71 and the end surface 76. As indicated in the sequence of Figs. 14 to 18, which illustrates a braking operation, the guide surface 7 first urges the engagement component 67 angularly and axially along the inclined surface 71. As shown in Figs. 15 and 16, the engagement component 67 then undergoes angular movement with respect to the gear rack 52 while riding on the end surface 76. The motion upon the guide surface 7 finally causes the engagement component 67 to come into a position where it can engage with a serration 54a, as is shown in Fig. 17.

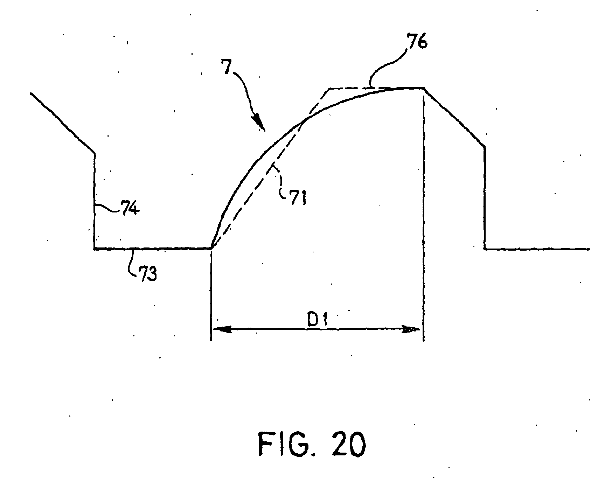

It will be understood that the guide surface 7 can take on other forms. For example, it can comprise two inclined surfaces 71, 72 as well as the end surface 76 as indicated in the conventional arrangement of Figs. 5 to 7. In this case, the distance D1 is defined by the peripheral extension of the first inclined surface 71 and the second inclined surface 72, formed adjacent to the end surface 76, together with the extension of the end surface 76 itself. In addition, these surfaces of the guide surface 7 need not be straight line surfaces, but may be curved. For example, as shown in with the solid line in Fig. 20, the guide surface 7 can be completely curved. It can also be only partially curved. For example, the guide surface 7 can start at the bottom surface 73 in Fig. 20 as a straight line and then become curved in the region toward the end surface.

In the embodiment of the guide surface shown in Fig. 14, the inclination of the inclined surface 71 can vary. It has been found that a particularly smooth operation is achieved with an inclination of between 40° and 65° with respect to the peripheral direction. More preferable is an inclination between 40° and 50°.

Returning to Fig. 14, an unfavorable condition is shown with respect to the phase relationship. Braking force has been applied to the pedal and the engagement component 67 is urged in reverse direction onto the inclined surface 71 of the guide surface 7. As indicated with the dashed line, the engagement component 67 contacts an outer corner portion of the next serration and can not immediately enter into a well portion 57 of the ring gear 54. As shown in Fig. 15, the engagement component 67 is then urged between the gear rack 52 and the ring gear 54. The engagement component 67 then rides on the end surface 76 of the guide surface 7. Upon further rotation in the reverse direction as shown in Fig. 16, the engagement component 67 reaches a position where it can enter a well region 57 of the next serration.

In this condition, the matching phase relationship has been achieved and the component 67 enters the serration 54a, where a braking force can be exerted in reverse direction as shown in Fig. 17. The amount of angular movement of the engagement component 67 from where it initially engages with a drive surface 74 of the depression 70 until it is engaged in a serration 54a is indicated in Fig. 17 as the braking angle. As mentioned, Figs. 14 to 17 represent the unfavorable condition, by which the component 67 does not immediately engage in a well region 57 of the serration 54a, but is mismatched and must first pass over a peak region 58 of the serration 54a.

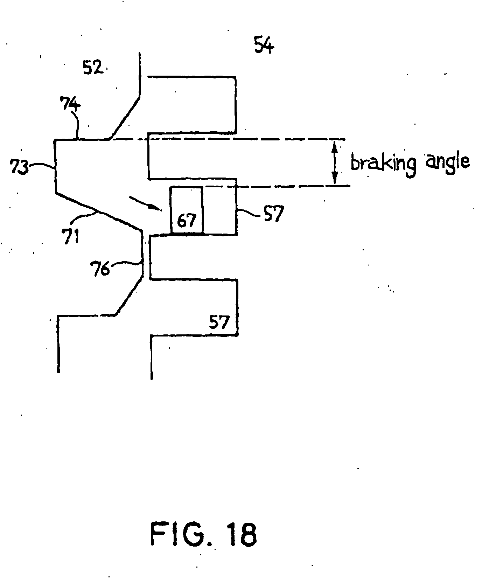

In the most favorable condition, the engagement component 67 would transfer immediately over to a well region 57 without having to ride on the end surface 76. This condition is illustrated in Fig. 18, where the braking angle is much smaller.

In the present embodiment, the guide surface 7 comprises the inclined surface 71 and the end surface 76. As mentioned, the surfaces can take on different shapes, while important is that they move the engagement component 67 out of the depression 70 in angular and axial direction, so as to engage with the serration 54a.

The guide surface 7 has a peripheral distance D1 as mentioned above which is less than or equal to the pitch D2 of the serrations 54a (see Fig. 14). According to the present invention, it has been found that with this requirement on the dimensions, the braking angle on the whole, i.e. for the most favorable phase conditions, intermediate phase conditions and the least favorable phase conditions, can be improved. Namely, the braking angle can be reduced, whereby the matching of phases is established earlier.

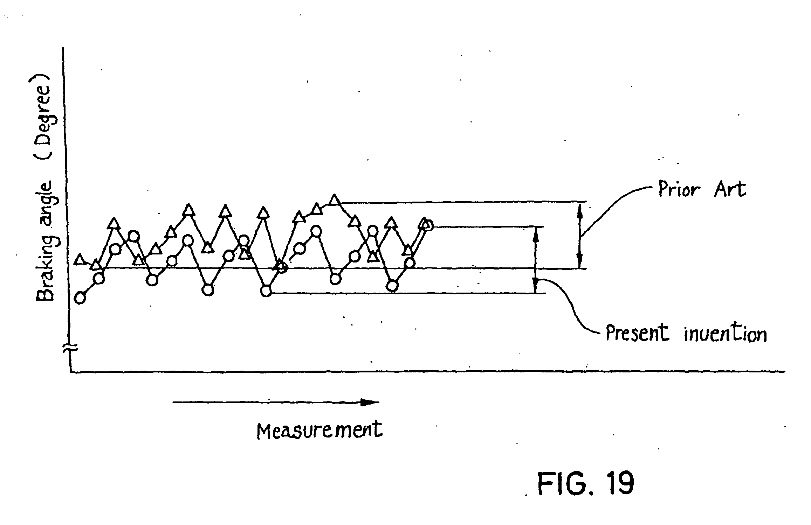

Fig. 19 shows the results of tests which have been performed to investigate this effect. The braking angle has been measured several times in a set-up where the peripheral distance D1 of the guide surface 7 was less than the pitch D2 of the serrations. These data points are indicated with circles in Fig. 19. An additional set of measurements was performed under the condition that the peripheral distance D2 was less than the pitch D1, as in the prior art. These data points are indicated in Fig. 19 with the triangles. The spread in the data is due to the fact that in some cases the engagement component 67 is favorably aligned with the serration 54 and sometimes less favorably.

The band width of the two sets of measurements is also shown in Fig. 19. As can be clearly seen, the braking angle of the data according to the present invention (D1 < D2) is reduced compared to that of the prior art (D1 > D2).

In addition to the above dimensional relationship, it has also been found that the width W of the engagement component 67 can also be used in defining a favorable matching phase relationship. As shown in Fig. 14, the width of the component 67 is indicated by W. Referring to Figs. 16 and 17, it can be seen that once the engagement component 67 begins to reach the well region 57 of a serration 54a, it is held in position through its contact with the end surface 76. However, the end surface 76 should have sufficient length to optimally engage the component 67. To account for this situation, the sum of the peripheral distance D1 of the guide surface 7 and the width W of the engagement portion 20 is provided to be greater than the pitch D2 of the serrations 54a. This condition, expressed mathematically as D1 + W > D2, is preferably present in combination with the above condition that D1 be less than or equal to D2.

It has also been found that the dimension of the width W of the engagement component 67 with respect to the bottom surface 73 (see Fig. 14) of the depression 70 can also be optimized. As shown in Fig. 14, the width W is slightly less than the width in peripheral direction of the bottom surface 73. If the widths of the component 67 and the bottom surface 73 were equal or nearly equal, the movement of the component 67 out of the depression 70 along the inclined surface 71 would be somewhat hindered at the start. It has been found that when the width W of the engagement component 67 is at least 10 % smaller than the width of the bottom surface 73, optimal movement of the component 67 out of the depression 70 is achieved when braking is started.

The operation of the three-speed internal hub with a coaster brake unit will now be described in conjunction with Figs. 5 to 7. As mentioned above, the dimensions in these figures do not correspond to those of the present invention. Nevertheless, the overall operation of the transmission with respect to the shifting and braking operations as set out below applies equally with the embodiments described above in Figs. 14 to 20.

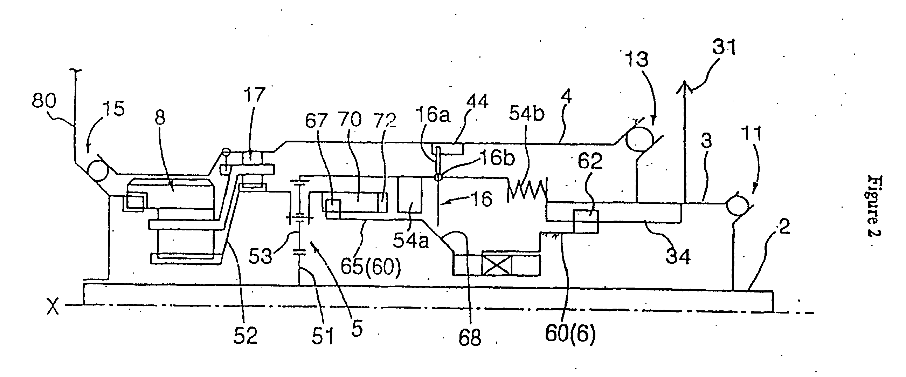

The high speed step can be realized by setting the clutch body 6 to the first position. This state is shown in Figs. 2 and 5. The forward rotational power received by the driver 3 through the chain is transmitted via the clutch body 6 to the gear rack 52, which is engaged with the engagement component 67 of the clutch body 6. Since the oscillating pawl 16a of the pawl clutch 16 is engaged with the ratchet 44 by the pawl spring 16c, the forward rotational power imparted to the gear rack 52 is boosted through the work of the planet gears 53 and the sun gear 51 before being transmitted to the ring gear 54, and is then transmitted to the hub body 4 through the pawl clutch 16.

Since the speed of the hub body 4 is greater than the speed of the gear rack 52, the roller clutch 17 overruns. When the pedal is turned backward in this state in order to brake, the engagement component 67 hits the first inclined surface 71 of the guide surface 7 formed in the depression 70, slides this over first inclined surface 71, keeps sliding until it reaches the second inclined surface 72, and then enters the serrations 54a of the ring gear 54. Once in the serrations 54a, the engagement component 67 transmits the reverse rotational power to the ring gear 54, and this reverse rotational power is further transmitted to the gear rack 52 via the planet gears 53. When the gear rack 52 is driven backward, the roller clutch 17 is actuated and the hub body is braked.

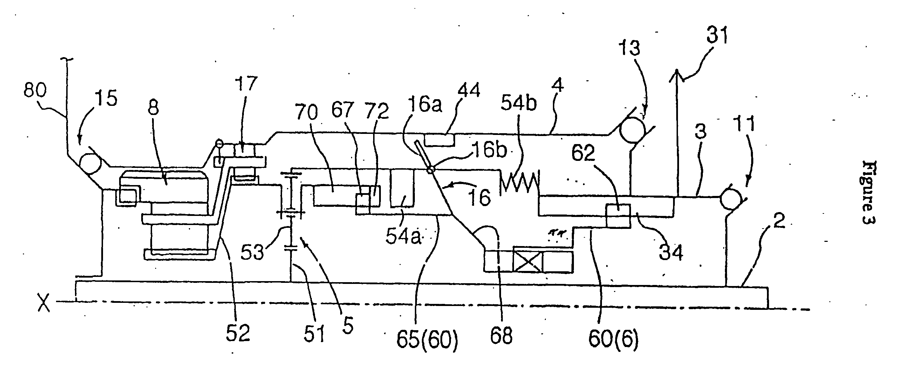

The medium speed step can be realized by setting the clutch body 6 to an intermediate position located between the first position and the second position. This state is shown in Figs. 3 and 6. The forward rotational power received by the driver 3 through the chain is transmitted via the clutch body 6 to the gear rack 52, which is still engaged with the engagement component 67 of the clutch body 6. Since the oscillating pawl 16a of the pawl clutch 16 has been separated from the ratchet 44 by the step 68 of the second clutch member 65, the forward rotational power imparted to the gear rack 52 is transmitted directly as it is to the hub body 4 via the roller clutch 17.

When the pedal is turned backward in this state in order to brake, the engagement component 67 hits the first inclined surface 71 of the inclined guide surface 7 formed in the depression 70, just as in the high speed step, slides over this first inclined surface 71, keeps sliding until it reaches the second inclined surface, and enters the serrations 54a of the ring gear 54. Once in the serrations 54a, the engagement component 67 transmits the reverse rotational power to the ring gear 54, and this reverse rotational power is further transmitted to the gear rack 52 via the planet gears 53, the roller clutch 17 is actuated, and the hub body is braked.

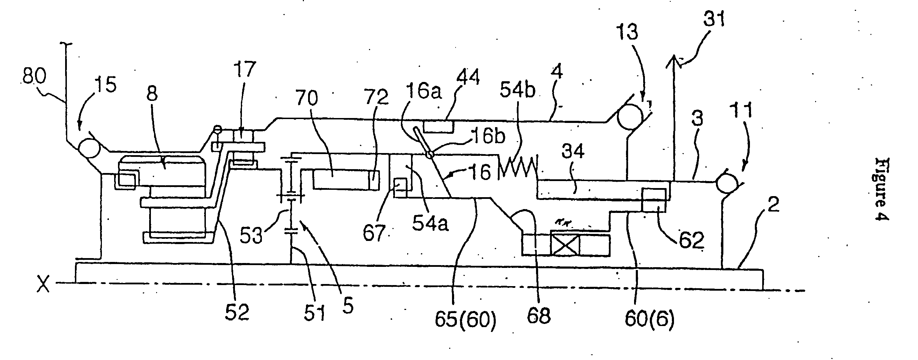

The low speed step can be realized by setting the clutch body 6 to the second position. This state is shown in Figs. 4 and 7. The forward rotational power received by the driver 3 through the chain is transmitted via the clutch body 6 to the ring gear 54, which is engaged with the engagement component 67 of the clutch body 6. Since the oscillating pawl 16a of the pawl clutch 16 is still separated from the ratchet 44 by the step 68 of the second clutch member 65, the forward rotational power imparted to the ring gear 54 is decreased through the work of the planet gears 53 and the sun gear 51 before being transmitted to the gear rack 52, and is then transmitted to the hub body 4 through the roller clutch 17.

When the pedal is turned backward in this state in order to brake, the engagement component 67, which has already entered the serrations 54a of the ring gear 54, transmits the reverse rotational power directly as it is to the ring gear 54, and this reverse rotational power is further transmitted to the gear rack 52 via the planet gears 53, the roller clutch 17 is actuated, and the hub body is braked.

The above description of embodiments of the present invention are given by way of example, while further modifications are possible without departing from the scope of the invention as defined in the appended claims. For example, the engagement means of the above embodiment comprises engagement components 67, which are operable to engage both the depressions 70 of the gear rack 52 and the serrations 54a of the ring gear 54. Alternatively, the engagement means can comprise a first set of engagement elements for engaging with the depressions 70 and a second set of separate engagement elements for engaging with the serrations. In addition, the engagement elements may be formed as projections which extend axially or radially from the clutch.

The above described guide surface 7 can comprise one or more inclined portions 71, 72 and the end surface 76. The inclined portions may be configured as straight lines or may also be curved. The transition from the inclined portion to the end surface 76 may also be smooth. In addition, the end surface 76 is preferably flat, but may also be slightly curved.

## Claims

1. A hub transmission with a coaster brake unit comprising:
a hub axle (2),
a drive member (3) rotatably mounted around the hub axle (2) ,
a hub body (4) rotatably mounted around the hub axle (2), a planetary gear mechanism (5) coupled between the drive member (3) and the hub body (4) for communicating rotational force from the drive member (3) to the hub body (4) through multiple rotational force transmission paths, the planetary gear mechanism (5) including:
at least one planet gear (53) supported by a planet gear rack (52) for rotation about the hub axle (2), the gear rack (52) including a plurality of depressions (70) formed In a peripheral direction thereof,
a ring gear (54) engaging the planet gear (53), the ring gear (54) including a plurality of serrations (54a) formed in a peripheral direction thereof,
a clutch (6) movable in a direction of an axis (X) of the axle (2) between a first position (a) and a second position (c),
engagement means (67) for engaging with at least one of the plurality of depressions (70) in the gear rack (52) and for transmitting forward rotational power to the gear rack (52) when the clutch (6) is located in the first position (a),
the engagement means (67) engaging with at least one of the plurality of serrations (54a) In the ring gear (54) for transmitting forward rotational power to the ring gear (54) when the clutch (6) is located In the second position (c), and
forcible movement means including a guide surface (7) formed in the gear rack (52) for contacting the engagement means (67) and moving the clutch (6) to engage with the plurality of serrations (54a) when reverse rotational power is applied to the drive member (3), **characterized in that** a peripheral distance (D1) of the guide surface (7) in the gear rack (52) is less than or equal to a peripheral pitch (D2) of the serrations (54a) and the engagement means (67) has a width (W) in peripheral direction and wherein the sum of said width (W) and the peripheral distance (D1) of the guide surface (7) is greater than the peripheral pitch (D2) of the serration (54a).

2. The hub transmission according to claim 1, wherein the engagement means comprise an engagement component (67) projecting outwardly in radial direction from the clutch (6) for engagement with at least one of the plurality of depressions (70) when the clutch is in the first position (a) and for engagement with at least one of the plurality of serrations (54a) when the clutch is in the second position (c).

3. The hub transmission according to claim 1, wherein the engagement means (67) comprise a plurality of first engagement elements engagable with the plurality of depressions (70) and a plurality of second engagement elements engagable with the plurality of serrations (54a), each of the first and second engagement elements being an axial or a radial projection.

4. The hub transmission according to claim 1, wherein the width (W) of the engagement means (67) is at least 10 % smaller than a width in peripheral direction of a bottom surface (73) of the depression (70).

5. The hub transmission according to any one of the claims 1 to 4, wherein said guide surface (7) is at least partially curved.

6. The hub transmission according to any one of the claims 1 to 5, wherein the guide surface (7) comprises a first inclined surface (71) and an end surface (76).

7. The hub transmission according to claim 6, wherein the first inclined surface (71) has an inclination angle of between 40° and 65° with respect to the peripheral direction.

8. The hub transmission according to any one of the claims 1 to 5, wherein the guide surface (7) comprises a first inclined surface (71), a second Inclined surface (72) and an end surface (76), the first and second inclined surfaces being formed adjacent to one another and the peripheral distance (D1) being the peripheral extension of the first inclined surface (71), the second inclined surface (72) and the end surface (76).

9. The hub transmission according to claim 8, wherein the second inclined surface (72) has a smaller inclination than the first inclined surface (71) with respect to the peripheral direction.

10. The hub transmission according to any one of the claims 1 to 9, wherein each,of the plurality of depressions (70) is defined by said guide surface (7), by a side surface (74) and a bottom surface (73) formed In a peripheral direction on an annular portion of the gear rack (52).

11. The hub transmission according to claim 10, wherein the first inclined surface (71) of the guide surface (7) is located adjacent to the bottom surface (73).

12. The hub transmission according to any one of the claims 1 to 11, wherein the plurality of serrations (54a) are formed in a peripheral direction on an annular portion of the ring gear (54).

13. The hub transmission according to any one of the claims 1 to 12, wherein the ring gear (54) is movable in the direction of the axis (X) of the axle (2), and wherein ring gear biasing means (54b) are provided for biasing the ring gear (54) toward the gear rack (52).

14. The hub transmission according to any one of the claims 1 to 13, further comprising a first one-way transmission mechanism (16) disposed between the ring gear (54) and the hub body (4), and wherein the first one-way transmission mechanism (16) is structured for transmitting rotational force from the drive member (3) to the hub body (4) when the clutch (6) Is located in the first Position (a).

15. The hub transmission according to claim 14, wherein the clutch (6) includes a transmission disabling member (68) for disabling the first one-way transmission mechanism (16) when the clutch (6) is located in an intermediate position (b) between the first position (a) and the second position (c), and wherein a second one-way transmission mechanism (17) is disposed between the gear rack (52) and the hub body (4), the second one-way transmission mechanism (17) being structured for transmitting rotational force from the drive member (3) to the hub body (4) when the clutch is located in the intermediate position (b).

16. The hub transmission according to claim 14, wherein the transmission disabling member (68) disables the first one-way transmission mechanism (16) when the clutch (6) is located in the second position (d), and wherein the second one-way transmission mechanism (17) is structured for transmitting rotational force from the drive member (3) to the hub body (4) when the clutch is located in the second position (c).

## Patentansprüche

1. Ein Nabengetriebe mit einer Rücktrittsbremseinheit mit:
einer Nabenwelle (2),
einem Antriebselement (3), welches drehbar um die Nabenwelle (2) angeordnet ist,
einem Nabenkörper (4), welcher drehbar um die Nabenwelle (2) angeordnet ist, einer Planetengetriebeeinrichtung (5), welche das Antriebselement (3) und den Nabenkörper (4) verbindet, um Rotationskraft vom Antriebselement (3) zum Nabenkörper (4) durch mehrfache Rotationskraftübertragungswege zu übertragen, wobei die Planetengetriebeeinrichtung (5) folgendes aufweist:
wenigstens ein Planetenrad (53), welches durch einen Planetenradträger (52) zur Drehung um die Nabenwelle (2) gelagert ist, wobei der Planetenradträger (52) eine Vielzahl von Vertiefungen (70) aufweist, welche in einer Umfangsrichtung darin ausgebildet sind,
einem Hohlrad (54), welches in das Planetenrad (53) eingreift, wobei das Hohlrad (54) eine Vielzahl von Kerbverzahnungen (54a) aufweist, welche in einer Umfangsrichtung darin ausgebildet sind,
einer Kupplung (6), welche in einer Richtung einer Achse (X) der Nabenwelle (2) zwischen einer ersten Position (a) und einer zweiten Position (c) bewegbar ist,
Eingriffseinrichtungen (67) zum Eingriff in wenigstens eine der Vielzahl von Vertiefungen (70) in dem Planetenradträger (52) und zur Übertragung von Rotationskraft zum Planetenradträger (52), wenn die Kupplung (6) in der ersten Position (a) angeordnet ist,
wobei die Eingriffseinrichtungen (67) wenigstens in eine der Vielzahl von Kerbverzahnungen (54a) im Hohlrad (54) eingreifen, um Rotationskraft zum Hohlrad (54) zu übertragen, wenn die Kupplung (6) in der zweiten Position (c) angeordnet ist, und
Bewegungszwangseinrichtungen, welche eine Führungsfläche (7) aufweisen, welche in dem Planetenradträger (52) ausgebildet ist, um mit den Eingriffseinrichtungen (67) in Verbindung zu treten und die Kupplung (6) zu bewegen, um in die Vielzahl von Kerbverzahnungen (54a) einzugreifen, wenn rückwärtsgerichtete Rotationskraft auf das Antriebselement (3) ausgeübt wird,
**dadurch gekennzeichnet, dass**
ein Abstand in Umfangsrichtung (D1) der Führungsfläche (7) in dem Planetenradträger (52) kleiner oder gleich ist als eine Beabstandung in Umfangsrichtung (D2) der Kerbverzahnungen (54a) und
die Eingriffseinrichtung (67) eine Breite (W) in Umfangsrichtung aufweist, und wobei die Summe der Breite (W) und des Abstands in Umfangsrichtung (D1) der Führungsfläche (7) größer ist als die Beabstandung in Umfangsrichtung (D2) der Kerbverzahnung (54a).

2. Das Nabengetriebe gemäß Anspruch 1, wobei die Eingriffseinrichtungen eine Eingriffskomponente (67) aufweisen, welche sich in radialer Richtung von der Kupplung (6) zum Eingriff in wenigstens eine der Vielzahl von Vertiefungen (70) nach außen erstreckt, wenn die Kupplung in der ersten Position (a) ist, und zum Eingriff in wenigstens eine der Vielzahl von Kerbverzahnungen (54a), wenn die Kupplung in der zweiten Position (c) ist.

3. Das Nabengetriebe gemäß Anspruch 1, wobei die Eingriffseinrichtungen (67) eine Vielzahl von ersten Eingriffselementen aufweisen, welche in die Vielzahl von Vertiefungen (70) eingreifen können, und einer Vielzahl von zweiten Eingriffselementen, welche in die Vielzahl von Kerbverzahnungen (54a) eingreifen können, wobei jedes der ersten und zweiten Eingriffselemente als axialer oder radialer Vorsprung ausgebildet ist.

4. Das Nabengetriebe gemäß Anspruch 1, wobei die Breite (W) der Eingriffseinrichtung (67) wenigstens 10 % kleiner ist als eine Breite in Umfangsrichtung einer unteren Fläche (73) der Vertiefung (70).

5. Das Nabengetriebe gemäß wenigstens einem der Ansprüche 1 bis 4, wobei die Führungsfläche (7) wenigstens teilweise gekrümmt ist.

6. Das Nabengetriebe gemäß wenigstens einem der Ansprüche 1 bis 5, wobei die Führungsfläche (7) eine erste geneigte Fläche (71) und eine Endfläche (76) aufweist.

7. Das Nabengetriebe gemäß Anspruch 6, wobei die erste geneigte Fläche (71) einen Neigungswinkel von 40 bis 65 Grad in Bezug auf die Umfangsrichtung aufweist.

8. Das Nabengetriebe gemäß wenigstens einem der Ansprüche 1 bis 5, wobei die Führungsfläche (7) eine erste geneigte Fläche (71), eine zweite geneigte Fläche (72) und eine Endfläche (76) aufweist, wobei die ersten und zweiten geneigten Flächen benachbart zueinander ausgebildet sind und der Abstand in Umfangsrichtung (D1) die Umfangserweiterung der ersten geneigten Fläche (71), der zweiten geneigten Fläche (72) und der Endfläche (76) ist.

9. Das Nabengetriebe gemäß Anspruch 8, wobei die zweite geneigte Fläche (72) eine kleinere Neigung als die erste geneigte Fläche (71) in Bezug auf die Umfangsrichtung aufweist.

10. Das Nabengetriebe gemäß wenigstens einem der Ansprüche 1 bis 9, wobei jede der Vielzahl von Vertiefungen (70) von der Führungsfläche (7), einer Seitenfläche (74) und einer unteren Fläche (73) begrenzt wird, welche in einer Umfangsrichtung auf einem ringförmigen Abschnitt des Planetenradträgers (52) ausgebildet ist.

11. Das Nabengetriebe gemäß Anspruch 10, wobei die erste geneigte Fläche (71) der Führungsfläche (7) benachbart zur unteren Fläche (73) angeordnet ist.

12. Das Nabengetriebe gemäß wenigstens einem der Ansprüche 1 bis 11, wobei die Vielzahl von Kerbverzahnungen (54a) in einer Umfangsrichtung auf einem ringförmigen Abschnitt des Hohlrads (54) ausgebildet sind.

13. Das Nabengetriebe gemäß wenigstens einem der Ansprüche 1 bis 12, wobei das Hohlrad (54) in die Richtung der Achse (X) der Nabenwelle (2) bewegbar ist, und wobei Hohlrad-Vorspanneinrichtungen (54b) vorgesehen sind, um das Hohlrad (54) in Richtung des Planetenradträgers (52) vorzuspannen.

14. Das Nabengetriebe gemäß wenigstens einem der Ansprüche 1 bis 13, welches ferner eine erste Freilauf-Übertragungseinrichtung (16) aufweist, welche zwischen dem Hohlrad (54) und dem Nabenkörper (4) angeordnet ist, und wobei die erste Freilauf-Übertragungseinrichtung (16) zur Übertragung von Rotationskraft vom Antriebselement (3) zum Nabenkörper (4) ausgebildet ist, wenn die Kupplung (6) in der ersten Position (a) angeordnet ist.

15. Das Nabengetriebe gemäß Anspruch 14, wobei die Kupplung (6) eine Übertragungsunterbindungseinrichtung (68) aufweist, um die erste Freilauf-Übertragungseinrichtung (16) zu inaktivieren, wenn die Kupplung (6) in einer Zwischenposition (b) zwischen der ersten Position (a) und der zweiten Position (c) angeordnet ist, und wobei eine zweite Freilauf-Übertragungseinrichtung (17) zwischen dem Planetenradträger (52) und dem Nabenkörper (4) angeordnet ist, wobei die zweite Freilauf-Übertragungseinrichtung (17) zur Übertragung von Rotationskraft vom Antriebselement (3) zum Nabenkörper (4) ausgebildet ist, wenn die Kupplung in der Zwischenposition (b) angeordnet ist.

16. Das Nabengetriebe gemäß Anspruch 14, wobei das Übertragungsunterbindungselement (68) die erste Freilauf-Übertragungseinrichtung (16) inaktiviert, wenn die Kupplung (6) in der zweiten Position (d) angeordnet ist, und wobei die zweite Ein-Weg-Übertragungseinrichtung (17) zur Übertragung von Rotationskraft vom Antriebselement (3) zum Nabenkörper (4) ausgebildet ist, wenn die Kupplung in der zweiten Position (c) angeordnet ist.

## Revendications

1. Transmission de moyeu avec une unité de frein à rétropédalage comprenant :
un bras de moyeu (2),
un membre d'entraînement (3) monté en rotation autour de l'arbre de moyeu (2),
un corps de moyeu (4) monté en rotation autour de l'arbre de moyeu (2),
un mécanisme de train planétaire (5) couplé entre le membre d'entraînement (3) et le corps de moyeu (4) pour communiquer une force rotationnelle du membre d'entraînement (3) au corps de moyeu (4) à travers de multiples chemins de transmission de force rotationnelle, le mécanisme du train planétaire (5) incluant :
au moins une roue d'engrenage planétaire (53) supporté par une crémaillère (52) pour une rotation autour de l'arbre de moyeu (2), la crémaillère (52) incluant une dépression (70) formée dans une direction périphérique de celle-là,
une couronne (54) engagent la roue d'engrenage planétaire (53), la couronne (54) incluant une dentelure (54a) formée dans une direction périphérique de celle-là,
un embrayage (6) mobile dans une direction d'un axe (X) de l'arbre (2) entre une première position (a) et une seconde position (c),
des moyens d'engagement (67) prévus sur l'embrayage (6) pour s'engager avec la dépression (70) dans la crémaillère (52) et pour transmettre une puissance rotationnelle avant à la crémaillère (52) quand l'embrayage (6) est situé dans la première position (a),
les moyens d'engagement (67) s'engageant avec la dentelure (54a) dans la couronne (54) pour transmettre une puissance rotationnelle avant à la couronne (54) quand l'embrayage (6) est situé dans la seconde position (c), et
des moyens de mouvement forcé incluant une surface guide (7) formée dans la crémaillère (52) pour contacter les moyens d'engagement (67) et bouger l'embrayage (6) pour s'engager avec la dentelure (54a) quand la puissance rotationnelle inverse est appliquée au membre d'entraînement (3) **caractérisé en ce que**
une distance périphérique (D1) de la surface guide (7) dans la crémaillère (52) est inférieure ou égale à un pas périphérique (D2) de la dentelure (54a), et le moyen d'engagement (67) a une largeur (W) dans une direction périphérique et où la somme de ladite largeur (W) et la distance périphérique (D1) de la surface guide (7) est plus grande que le pas périphérique (D2) de la dentelure (54a).

2. Transmission de moyeu selon la revendication 1, où les moyens d'engagement comprennent un composant d'engagement (67) en saillie extérieurement dans une direction radiale de l'embrayage (6) pour un engagement avec au moins une parmi la pluralité de dépressions (70) quand l'embrayage est dans la première position (a) et pour engagement avec au moins une parmi la pluralité de dentelures (54a) quand l'embrayage est dans la seconde position (c).

3. Transmission de moyeu selon la revendication 1, où les moyens d'engagement (67) comprennent une pluralité de premiers éléments d'engagement engageables avec la pluralité de dépressions (70) et une pluralité de seconds éléments d'engagement engageables avec la pluralité de dentelures (54a), chacun des premier et second éléments d'engagement étant une projection axiale ou radiale.

4. Transmission de moyeu selon la revendication 1, où la largeur (W) des moyens d'engagement (67) est au moins 10 % plus petite qu'une largeur en direction périphérique d'une surface de fond (73) de la dépression (70).

5. Transmission de moyeu selon l'une quelconque des revendications 1 à 4, où ladite surface guide (7) est au moins partiellement courbe.

6. Transmission de moyeu selon l'une quelconque des revendications 1 à 5, où la surface guide (7) comprend une première surface inclinée (71) et une surface d'extrémité (76).

7. Transmission de moyeu selon la revendication 6, où la première surface inclinée (71) a un angle d'inclinaison entre 40° et 65° relativement à la direction périphérique.

8. Transmission de moyeu selon l'une quelconque des revendications 1 à 5, où la surface guide (7) comprend une première surface inclinée (71), une seconde surface inclinée (72) et une surface d'extrémité (76), la première et la seconde surface inclinée étant formées adjacentes l'une à l'autre et la distance périphérique (D1) étant l'extension périphérique de la première surface inclinée (71), la seconde surface inclinée (72) et la surface d'extrémité (76).

9. Transmission de moyeu selon la revendication 8, où la seconde surface inclinée (72) a une plus petite inclinaison que la première surface inclinée (71) relativement à la direction périphérique.

10. Transmission de moyeu selon l'une quelconque des revendications 1 à 9, où chacune parmi la pluralité de dépressions (70) est définie par ladite surface guide (7) par une surface de côté (74) et par une surface de fond (73) formée dans une direction périphérique sur une portion annulaire de la crémaillère (52).

11. Transmission de moyeu selon la revendication 10, où la première surface inclinée (71) de la surface guide (7) est située adjacente à la surface de fond (73).

12. Transmission de moyeu selon l'une quelconque des revendications 1 à 11, où la pluralité de dentelures (54a) sont formées dans une direction périphérique sur une portion annulaire de la couronne (54).

13. Transmission de moyeu selon l'une quelconque des revendications 1 à 12, où la couronne (54) est mobile dans la direction de l'axe (X) de l'arbre (2), et où les moyens de biaisement de la couronne (54b) sont prévus pour biaiser la couronne (54) vers la crémaillère (52).

14. Transmission de moyeu selon l'une quelconque des revendications 1 à 13, comprenant de plus un premier mécanisme de transmission à sens unique (16) disposé entre la couronne (54) et le corps de moyeu (4) et où le premier mécanisme de transmission à sens unique (16) est structuré pour transmettre une force rotationnelle du membre d'entraînement (3) au corps de moyeu (4) quand l'embrayage (6) est placé dans la première position (a).

15. Transmission de moyeu selon la revendication 14, où l'embrayage (6) inclut un membre de désactivation de transmission (68) pour désactiver le premier mécanisme de transmission à sens unique (16) quand l'embrayage (6) est situé dans une position intermédiaire (b) entre la première position (a) et la seconde position (c), et où un second mécanisme de transmission à sens unique (17) est disposé entre la crémaillère (52) et le corps de moyeu (4), le second mécanisme de transmission à sens unique (17) est structuré pour transmettre une force rotationnelle du membre d'entraînement (3) au corps de moyeu (4) quand l'embrayage est situé dans la position intermédiaire (b).

16. Transmission de moyeu selon la revendication 14, où le membre de désactivation de transmission (68) désactive le premier mécanisme de transmission à sens unique (16) quand l'embrayage (6) est situé dans la seconde position (d) et où le second mécanisme de transmission à sens unique (17) est structuré pour transmettre une force rotationnelle du membre d'entraînement (3) au corps de moyeu (4) quand l'embrayage est situé dans la seconde position (c).
